(19) Europäisches Patentamt
European Patent Office
Office européen des brevets

(11) **EP 4 604 016 A1**

(12) **EUROPEAN PATENT APPLICATION**

(43) Date of publication:
20.08.2025 Bulletin 2025/34

(21) Application number: 25157662.5

(22) Date of filing: 13.02.2025

(51) International Patent Classification (IPC):
$G06N\ 3/045^{(2023.01)}$    $G06N\ 3/0464^{(2023.01)}$
$G06N\ 20/00^{(2019.01)}$    $G06V\ 10/82^{(2022.01)}$
$G06V\ 20/40^{(2022.01)}$

(52) Cooperative Patent Classification (CPC):
G06N 3/045; G06N 3/0464; G06N 20/00;
G06V 10/82; G06V 20/41

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.02.2024 US 202463552959 P

(71) Applicant: GOOGLE LLC
Mountain View CA 94043 (US)

(72) Inventors:
• Zhou, Xingyi
Mountain View, 94043 (US)
• Arnab, Anurag
75009 Paris (FR)
• Buch, Shyamal Deep
75009 Paris (FR)
• Yan, Shen
Mountain View, 94043 (US)
• Myers, Austin Oliver
Mountain View, 94043 (US)
• Xiong, Xuehan
Mountain View, 94043 (US)
• Nagrani, Arsha
Mountain View, 94043 (US)
• Schmid, Cordelia Luise
Paris, 75009 (US)

(74) Representative: Marks & Clerk GST
1 New York Street
Manchester M1 4HD (GB)

(54) **VIDEO PROCESSING MODELS WITH STREAMING FEATURE BANK**

(57) One example aspect of the present disclosure is directed to a streaming model for video processing tasks, such as, for example, dense video captioning. Thanks to a memory mechanism, the proposed streaming model does not require access to all input frames concurrently in order to process the video. Moreover, thanks to a new streaming decoding algorithm, the proposed model can produce outputs causally without processing the entire input sequence. The streaming model is inherently suited to processing long videos - as it ingests frames sequentially (e.g., one at a time or in small batches). Moreover, as the output is streamed, intermediate predictions can be produced before processing the full video. This property means that the streaming model can be applied to process live video streams, as required for applications such as video conferencing, security and continuous monitoring among others.

FIG. 1

**Description**

PRIORITY

This application claims priority to U.S. Provisional Application No. 63/552,959, entitled VIDEO PROCESSING MODELS WITH STREAMING FEATURE BANK, filed on February 13, 2024, the contents of which are incorporated by reference herein in their entirety.

FIELD

The present disclosure generally relates to video processing and, more particularly, to systems and methods for generating machine learning predictions for videos, such as dense video captions, using a streaming feature bank.

BACKGROUND

The consumption of video content has seen exponential growth with the proliferation of digital media platforms and the increasing availability of high-speed internet. This surge in video data presents a significant challenge for automated video processing systems, particularly in the context of dense video captioning, which involves generating temporally-localized captions for video content.

The processing of videos, especially long and untrimmed ones, for the purpose of dense video captioning, has traditionally been constrained by the computational complexity and memory limitations inherent in existing machine learning models. State-of-the-art methods typically involve the sampling of a limited number of frames or the utilization of a single feature per frame for the entire video. These approaches are not capable of handling long input sequences effectively and are further limited by their inability to generate detailed output sequences.

Moreover, current state-of-the-art models necessitate the processing of the entire video before a single comprehensive prediction can be made, which is not only inefficient but also impractical for real-time applications.

SUMMARY

Aspects and advantages of embodiments of the present disclosure will be set forth in part in the following description, or can be learned from the description, or can be learned through practice of the embodiments.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One example aspect of the present disclosure is directed to a computer-implemented method to generate machine learning predictions for videos. The method includes, for each of a plurality of feature update iterations: processing, by a computing system comprising one or more computing devices, one or more incoming image frames of an input video with a machine-learned image encoder model to generate a set of incoming feature tokens; accessing, by the computing system, a current set of memory feature tokens stored in a memory bank; performing, by the computing system, a clustering algorithm on a combination of the set of incoming feature tokens and the set of current memory feature tokens to generate a set of updated memory tokens; and storing, by the computing system, the set of updated memory tokens in the memory bank. The method includes, for each of a plurality of decoding iterations: retrieving, by the computing system, the current set of memory feature tokens from the memory bank; and processing, by the computing system, the current set of memory feature tokens with a machine-learned prediction model to generate a prediction.

Example implementations may include one or more of the following features. The computer-implemented method, where the plurality of feature update iterations and the plurality of decoding iterations are performed in a streaming and causal manner. The machine-learned prediction model may include a language decoder and where the prediction may include a textual caption for the video. At each decoding iteration, the language decoder is provided with the current set of memory feature tokens and all prior textual captions generated at all prior decoding iterations. Performing, by the computing system, the clustering algorithm on the combination of the set of incoming feature tokens and the set of current memory feature tokens may include performing, by the computing system, a k-means clustering algorithm on the combination of the set of incoming feature tokens and the set of current memory feature tokens. Performing, by the computing system, the k-means clustering algorithm on the combination of the set of incoming feature tokens and the set of current memory feature tokens may include performing, by the computing system, a weighted k-means clustering algorithm on the combination of the set of incoming feature tokens and the set of current memory feature tokens, where the weighted k-means clustering algorithm applies a momentum weight to each cluster based on a number of tokens merged to each cluster. The number of decoding iterations is less than the number of feature update iterations. The decoding iterations are performed at a plurality of decoding points that are uniformly spaced throughout the video. For each feature update iteration, the one or more incoming image frames may include a single incoming image frame. Implementations of the described techniques may include hardware, a method or process, or computer software on a computer-accessible medium.

Another example aspect of the present disclosure is directed to one or more non-transitory computer-readable media that store computer-executable instructions for performing operations, the operations comprising: processing, by a computing system comprising one or more computing devices, one or more incoming image frames of an input video with a machine-learned image encoder model to generate a set of incoming feature tokens; accessing, by the computing system, a current set of memory feature tokens stored in a memory bank; performing, by the computing system, a clustering algorithm on a combination of the set of incoming feature tokens and the set of current memory feature tokens to generate a set of updated memory tokens; and processing, by the computing system, the current set of memory feature tokens with a machine-learned prediction model to generate a prediction; and modifying, by the computing system, one or more parameters of one or both of the machine-learned prediction model and the machine-learned image encoder model based on a loss function that compares the prediction to a ground truth target.

Example implementations may include one or more of the following features. The one or more non-transitory computer-readable media where the machine-learned prediction model may include a language decoder. The prediction of the language decoder may include a textual caption for the video and the ground truth target may include a ground truth textual caption. The language decoder is provided with an augmented set of previous event captions, the augmented set of previous event captions having been augmented by removal of a previous event caption from the set of previous event captions. Implementations of the described techniques may include hardware, a method or process, or computer software on a computer-accessible medium.

Another example aspect of the present disclosure is directed to a computing system comprising one or more processors and one or more non-transitory computer-readable media that store instructions that, when executed by the one or more processors, cause the computing system to perform operations. The operations include, for each of a plurality of feature update iterations: processing, by the computing system comprising one or more computing devices, one or more incoming input segments of an input sequence with a machine-learned encoder model to generate a set of incoming feature tokens; accessing, by the computing system, a current set of memory feature tokens stored in a memory bank; performing, by the computing system, a clustering algorithm on a combination of the set of incoming feature tokens and the set of current memory feature tokens to generate a set of updated memory tokens; and storing, by the computing system, the set of updated memory tokens in the memory bank. The operations include, for each of a plurality of decoding iterations: retrieving, by the computing system, the current set of memory feature tokens from the memory bank; and processing, by the computing system, the current set of memory feature tokens with a machine-learned prediction model to generate a prediction.

Example implementations may include one or more of the following features. The computing system where the input sequence may include: an input video; an input audio sequence; or an input textual sequence. The machine-learned prediction model may include: a language decoder; an image decoder; or an audio decoder. Performing, by the computing system, the clustering algorithm on the combination of the set of incoming feature tokens and the set of current memory feature tokens may include performing, by the computing system, a k-means clustering algorithm on the combination of the set of incoming feature tokens and the set of current memory feature tokens. Performing, by the computing system, the k-means clustering algorithm on the combination of the set of incoming feature tokens and the set of current memory feature tokens may include performing, by the computing system, a weighted k-means clustering algorithm on the combination of the set of incoming feature tokens and the set of current memory feature tokens, where the weighted k-means clustering algorithm applies a momentum weight to each cluster based on a number of tokens merged to each cluster. Implementations of the described techniques may include hardware, a method or process, or computer software on a computer-accessible medium.

Other aspects of the present disclosure are directed to various systems, apparatuses, non-transitory computer-readable media, user interfaces, and electronic devices. These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

Figure 1 depicts a graphical diagram of an example approach for generating predictions from videos using a streaming feature bank according to example embodiments of the present disclosure.

Figure 2 depicts a graphical diagram of an example approach for generating textual captions for videos using a streaming feature bank according to example embodiments of the present disclosure.

Figure 3 depicts a graphical diagram of an example approach for generating textual captions for videos using a streaming feature bank according to example embodiments of the present disclosure.

Figure 4 depicts a graphical diagram of an example clustering operation according to example embodiments of the present disclosure.

Figure 5 depicts a graphical diagram of an example decoding approach according to example embodiments of the present disclosure.

Figure 6 depicts a flow chart diagram of an example method for generating predictions from videos using a streaming feature bank according to example embodiments of the present disclosure.

Figure 7A depicts a block diagram of an example computing system according to example embodiments of the present disclosure.

Figure 7B depicts a block diagram of an example computing device according to example embodiments of the present disclosure.

Figure 7C depicts a block diagram of an example computing device according to example embodiments of the present disclosure.

Reference numerals that are repeated across plural figures are intended to identify the same features in various implementations.

DETAILED DESCRIPTION

The present disclosure introduces systems and methods for generating machine learning predictions for videos using a streaming feature bank. The proposed systems and methods can process videos, particularly long ones, using a memory bank and a streaming decoding algorithm. The technology addresses the limitations of existing techniques that struggle with long input sequences and detailed output sequences.

In particular, in traditional approaches, state-of-the-art models either sample very few frames or keep one feature per frame for all the frames. These methods are not suitable for handling long input or output sequences. They also require processing the entire video to make a single full prediction, which can be inefficient and time-consuming.

The present disclosure proposes computer-implemented systems and methods that process incoming image frames of an input video to generate a set of incoming feature tokens. These tokens are then combined with a current set of memory feature tokens stored in a memory bank. A clustering algorithm is performed on this combination to generate a set of updated memory tokens. These updated tokens are then processed with a machine-learned prediction model to generate a prediction. This method can be performed in a streaming and causal manner, allowing the model to handle arbitrarily long videos and make predictions before the entire video has been processed.

The present disclosure also introduces a novel memory mechanism based on K-means clustering. This mechanism allows the model to process variable numbers of frames with a fixed computational budget at decoding. Additionally, a streaming decoding algorithm is provided, allowing the model to make predictions at any timestamp of the video, not just at the end.

The method disclosed herein significantly improves the state-of-the-art on dense video captioning benchmarks and other long context tasks. It is inherently suited to processing long videos and can be applied to live video streams, making it ideal for applications such as video conferencing, security, and/or other tasks applied to videos. The technology described in the present disclosure represents a significant advancement in the field of video processing and machine learning.

More particularly, one example aspect of the present disclosure is directed to a streaming model for video processing tasks, such as, for example, dense video captioning. Thanks to a memory mechanism, the proposed streaming model does not require access to all input frames concurrently in order to process the video. Moreover, thanks to a new streaming decoding algorithm, the proposed model can produce outputs causally without processing the entire input sequence. The streaming model is inherently suited to processing long videos - as it ingests frames sequentially (e.g., one at a time or in small batches). Moreover, as the output is streamed, intermediate predictions can be produced before processing the full video. This property means that the streaming model can be applied to process live video streams, as required for applications such as video conferencing, security and continuous monitoring among others.

One aspect of the proposed model is a novel memory bank mechanism that can operate over a number of feature update iterations. The memory bank can maintain a condensed set of tokens for the video while ingesting incoming frame(s) in a piecemeal fashion (e.g., one at a time or in small batches). The memory bank can be based on K-means clustering, and can use a fixed number of cluster-center tokens to represent the video at each timestamp. This approach is simple and effective, and can process variable numbers of frames, with a fixed computational budget at decoding.

Another aspect of the proposed model is a streaming decoding algorithm that can operate over a number of decoding iterations. The model can be trained such that given the memory features in the memory bank at a "decoding point" at a particular timestamp, the model generates predictions (e.g., all event captions) for the portion of the video before the particular timestamp. The model can thus be trained to make predictions at any timestamp of the video, and not just at the end of the video as in conventional, non-streaming models.

In some implementations, prediction(s) from earlier decoding points can be provided to the model as context(s) for later decoding points. This context avoids generating duplicative predictions (e.g., duplicative captions for events). The use of earlier predictions as context for later predictions means that the earlier predictions can also be viewed as an "explicit" memory (e.g., in natural language) that summarizes the earlier video. Thus, the proposed streaming output is also motivated by the fact that as the video length grows, the memory bank will inevitably lose information over time as its size is bounded. This issue is averted by making predictions at various points throughout the video before we have processed the entire video, and still keep early information via language context.

Thus, one example aspect of the present disclosure is directed to a computer-implemented method for generating machine learning predictions for videos. This method involves a series of feature update iterations and decoding iterations, which can be performed in a streaming and causal manner. For instance, a computing system, comprising one or more computing devices, can process incoming image frames of an input video with a machine-learned image encoder model. This generates a set of incoming feature tokens.

The computing system can perform a clustering algorithm on a combination of the set of incoming feature tokens and the set of current memory feature tokens, thereby generating a set of updated memory tokens. The clustering algorithm can take the form of a K-means clustering algorithm. This type of algorithm groups similar data points together, providing a way to categorize incoming feature tokens and current memory feature tokens. The set of updated memory tokens can be stored in the memory bank (e.g., replacing the previous set of tokens stored in the memory bank).

In some implementations, the memory bank has a size of K and the set of incoming feature tokens has a size of $N_f$. In some implementations, K can be defined as a positive integer times $N_f$. The method can include filling the memory bank with the incoming feature tokens from the first $K/N_f$ incoming image frames of the video before performing the feature update iterations.

In some implementations, the K-means clustering algorithm can be a weighted K-means clustering algorithm. This weighted algorithm applies a momentum weight to each cluster, based on the number of tokens merged to each cluster. This ensures that cluster centers that have merged more tokens change slower, preventing the cluster centers from quickly biasing towards incoming features.

In some implementations, for each feature update iteration, the one or more incoming image frames can comprise a single incoming image frame. This allows the system to process the video in a streaming manner, ingesting frames one at a time. This property makes the system suitable for processing long videos and live video streams.

When a decoding iteration is performed, the system retrieves the current set of memory feature tokens from the memory bank and processes them with a machine-learned prediction model to generate a prediction. The machine-learned prediction model, as described in the present disclosure, can include a language decoder. The prediction generated by this decoder can take the form of a textual caption for the video. This can be particularly useful in applications such as video conferencing, security monitoring, and other live video streaming scenarios. For each decoding iteration, the language decoder can be provided with the current set of memory feature tokens as well as all prior textual captions generated at previous decoding iterations.

In some implementations, the number of decoding iterations can be less than the number of feature update iterations. For example, the decoding iterations can be performed at a plurality of decoding points that are uniformly spaced throughout the video.

The systems and methods of the present disclosure provide a number of technical solutions to a number of technical problems. One example technical problem addressed by the present disclosure is the need for an improved method and system for video processing that can handle arbitrarily long videos and generate detailed, temporally-localized captions in a streaming and causal manner. This need arises from the limitations of existing video processing models, which are unable to scale efficiently with the length of the video and are restricted by the computational costs associated with processing a large number of video frames.

An example technical effect of the proposed techniques is to provide a solution that overcomes the aforementioned limitations by introducing a novel memory mechanism based on K-means clustering and a streaming decoding algorithm. The memory mechanism allows for the processing of variable numbers of frames with a fixed computational budget, effectively managing the memory constraints and ensuring that the computational cost remains bounded irrespective of the video length. The streaming decoding algorithm enables the generation of predictions at various timestamps throughout the video, thus eliminating the need to process the entire video before making predictions. This approach not only reduces latency but also enhances the model's accuracy by preserving early video information through language context.

The proposed techniques thus solve a technical problem recognized in the art by providing a technical contribution that enables the efficient processing of long video sequences and the generation of temporally-localized captions in a streaming fashion, suitable for real-time applications and live video streams. The solution is motivated by technical considerations related to memory management, computational efficiency, and real-time processing capabilities, which are fundamental to the technical field of video processing and machine learning.

While the present disclosure focuses on video processing tasks such as dense captioning, the proposed streaming memory bank and decoding algorithms can also be applied to various other input modalities to provide similar benefits. The other input modalities can include long sequences of textual data, audio data, and/or other input modalities. The proposed streaming memory bank and decoding algorithms can provide the same benefits when applied to these modalities, including maintaining a fixed computational size and budget of tokens to summarize the incoming content (e.g., whether text, audio, video, or other) to assist with generating predictions.

As one example, when considering long sequences of textual data, the streaming memory bank can be adapted to process continuous streams of text such as live transcripts of events, books, or real-time social media feeds. In such scenarios, the memory bank would cluster textual tokens, maintaining a fixed-size summary of the narrative or discussion, which can then be used to generate predictions about the subject matter or to provide contextually relevant information without the need for processing the entire text at once.

Similarly, for audio data, the streaming memory bank could be employed to process long audio streams, such as podcasts, radio broadcasts, or continuous speech in a conference. The memory bank could condense the audio features into a fixed-size representation, enabling real-time applications such as speech-to-text transcription or live audio event detection to operate efficiently and with lower latency.

More particularly, the proposed streaming memory bank and decoding algorithms function as a dynamic summarization tool that condenses the essence of the input data into a manageable representation, regardless of the input type. This allows for a constant computational budget and ensures that the system can operate in a streaming fashion, making it suitable for real-time applications across various domains. The ability to generate intermediate predictions without waiting for the completion of the input sequence is a significant advantage, particularly for applications that require timely processing, such as live monitoring or interactive systems. Thus, the principles underlying the disclosed invention can be applied broadly to enhance the processing of any long sequence data in a computationally efficient and effective manner.

With reference now to the Figures, example embodiments of the present disclosure will be discussed in further detail.

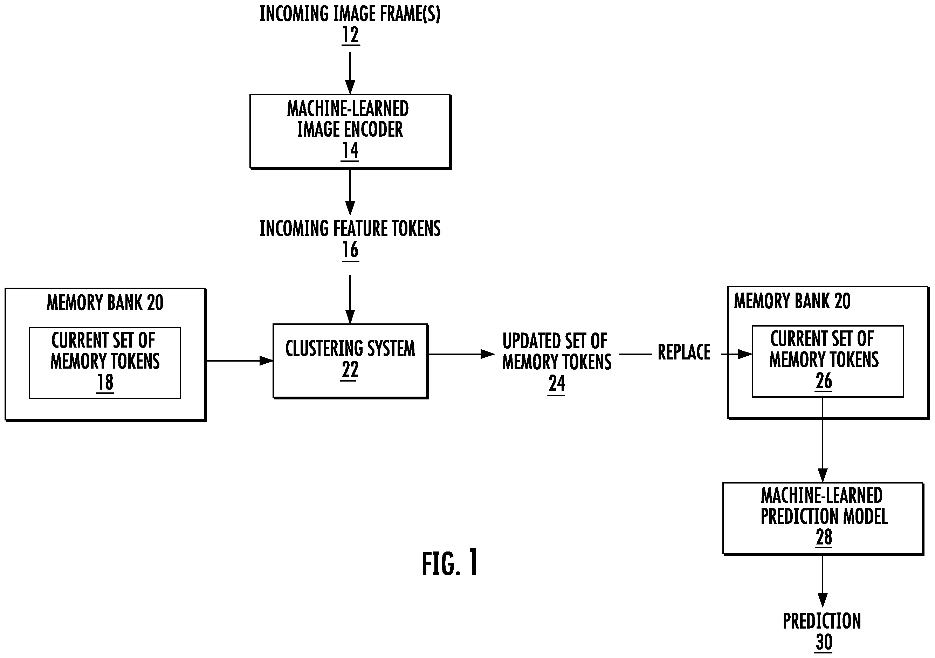

Referring now to FIG. 1, a graphical diagram illustrates an example approach for generating predictions from videos using a streaming feature bank in accordance with example embodiments of the present disclosure. The process begins with the acquisition of incoming image frame(s) 12, which are then processed by a machine-learned image encoder 14. The encoder 14 is configured to transform the incoming image frame(s) 12 into a set of incoming feature tokens 16, which serve as a latent representation of the visual information contained within the frames.

The incoming feature tokens 16 are then introduced to a memory bank 20, which houses a current set of memory tokens 18. These memory tokens 18 represent a condensed summary of the video's content up to the current processing point and are continuously or periodically updated to incorporate new information from incoming frames.

A clustering system 22 operates on the combination of incoming feature tokens 16 and the current set of memory tokens 18 to generate an updated set of memory tokens 24. The clustering system 22 can employ a K-means clustering algorithm or a weighted K-means clustering algorithm, which applies a momentum weight to each cluster based on the number of tokens merged into each cluster. This clustering operation ensures that the updated set of memory tokens 24 captures the most salient features from the video while maintaining a fixed computational budget.

Once the updated set of memory tokens 24 is generated, they replace the previous current set of memory tokens 18 in the memory bank 20 to form a new current set of memory tokens 26. This replacement is part of the iterative process that allows the system to handle arbitrarily long videos by updating the memory bank 20 with the most recent and relevant information.

The current set of memory tokens 26 is then fed into a machine-learned prediction model 28, which processes the tokens to generate a prediction 30. As one example, the prediction model 28 can include a language decoder that outputs textual captions for the video, thereby enabling dense video captioning in a streaming and causal manner.

The approach depicted in FIG. 1 illustrates the streaming model's ability to process video input in real-time, making it suitable for applications such as live video streaming, video conferencing, and security monitoring. The system's design allows for intermediate predictions to be produced before the full video has been processed, significantly reducing latency and enhancing the model's accuracy. Moreover, the system can be adapted to process other input modalities, such as audio data or long sequences of textual data, by applying the same principles of streaming memory bank and decoding algorithms to maintain a fixed computational size and budget of tokens.

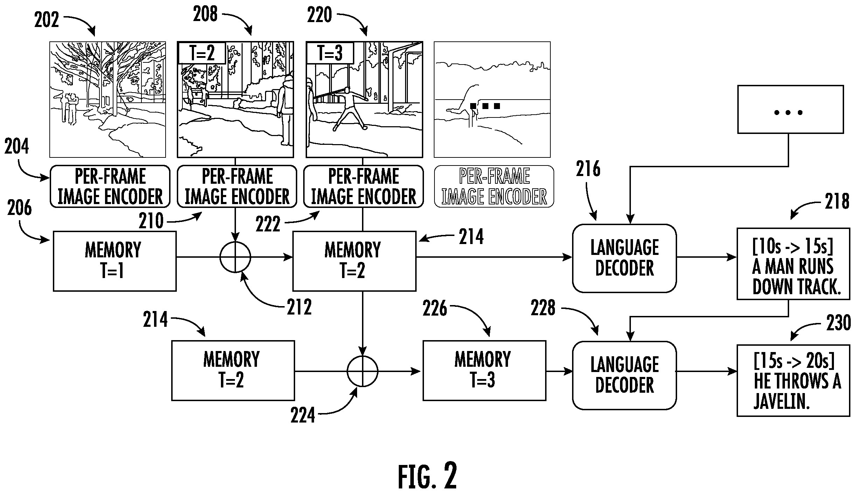

Referring now to FIG. 2, a graphical diagram illustrates an example approach for generating textual captions for videos using a streaming feature bank in accordance with example embodiments of the present disclosure. The process initiates with the acquisition of an image frame at T=1 202, which is subsequently processed by a per-frame image encoder 204 for T=1. The image encoder 204 is configured to transform the image frame 202 into a set of incoming feature tokens, which are then stored in a memory 206 at T=1.

As the video progresses to the next timestamp, T=2, a new image frame at T=2 208 is processed by a corresponding per-frame image encoder 210 for T=2. For example the encoder 210 may be the same encoder as encoder 204, just applied to different input frames. The feature tokens generated by the image encoder 210 are then subjected to a clustering operation 212, which updates the memory 214 at T=2 by integrating the new information while maintaining a fixed computational budget. This updated memory 214 at T=2 is then utilized by a language decoder 216 for T=2 to generate a textual caption for T=2 218, which provides a temporally-localized description of the events occurring in the video at that specific timestamp.

The process is repeated for subsequent frames, as shown with the image frame at T=3 220, which is processed by the per-frame image encoder 222 for T=3. The clustering operation 224 updates the memory 226 at T=3, and the language decoder 228 for T=3 utilizes the updated memory 226 to generate a textual caption for T=3 230. This caption 230 is another temporally-localized description corresponding to the events captured in the image frame at T=3.

The streaming feature bank approach depicted in FIG. 2 enables the generation of dense video captions in a streaming and causal manner. By processing each frame sequentially and updating the memory with the most relevant features, the system can handle long videos and generate detailed captions without waiting for the entire video to be processed. This approach is advantageous for real-time applications, such as live video streaming, where immediate caption generation is essential.

In alternative embodiments, the per-frame image encoders 204, 210, 222 can be adapted to process batches of frames simultaneously, allowing for parallel processing and increased efficiency. The clustering operations 212, 224 can employ various clustering algorithms, such as hierarchical clustering or density-based clustering, to cater to different video content complexities and feature distributions. The language decoders 216, 228 can also be equipped with advanced natural language processing capabilities to generate more nuanced and contextually rich captions.

The system can further be configured to adapt the frequency of decoding iterations, allowing for more frequent caption generation during periods of high activity. Additionally, the memory update mechanism can incorporate feedback loops that prioritize the retention of features that are more relevant to the events being captioned, ensuring that the most critical information is preserved in the memory bank.

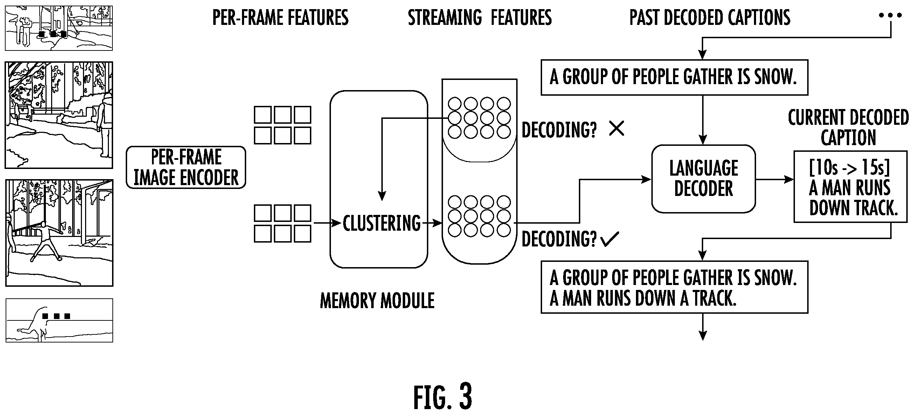

Referring now to FIG. 3, a graphical diagram illustrates an example approach for generating textual captions for videos using a streaming feature bank in accordance with example embodiments of the present disclosure. The diagram illustrates the integration of per-frame features with a memory module to enable streaming features, which are then utilized by a language decoder to produce temporally-localized captions.

The process begins with the per-frame image encoder, which processes individual incoming image frames to generate per-frame features. These features are then fed into the memory module, which employs a clustering operation to condense the incoming features into a more manageable set of streaming features. The memory module can handle an arbitrarily long sequence of incoming frames by updating its set of memory tokens through the clustering operation, ensuring that the computational cost remains bounded irrespective of the video length.

The streaming features serve as input to the language decoder, which also receives past decoded captions as context. If decoding is required, the decoder generates a current decoded caption, such as "[10s -> 15s] A man runs down a track," which provides a detailed description of the events occurring within the specified time interval.

The language decoder can leverage the past decoded captions to prevent the generation of duplicative captions and to maintain a coherent narrative throughout the video. For instance, if a previous caption described "A group of people gather in snow," the language decoder would avoid repeating this information in subsequent captions. Instead, it would focus on new events that have not been previously described, ensuring that each caption adds value to the overall understanding of the video content.

The approach depicted in FIG. 3 illustrates the streaming model's ability to process video input in real-time and generate dense video captions in a streaming and causal manner. By continuously updating the memory module with new information and providing the language decoder with both streaming features and contextual past captions, the system can generate accurate and detailed captions that enhance the viewer's understanding of the video content.

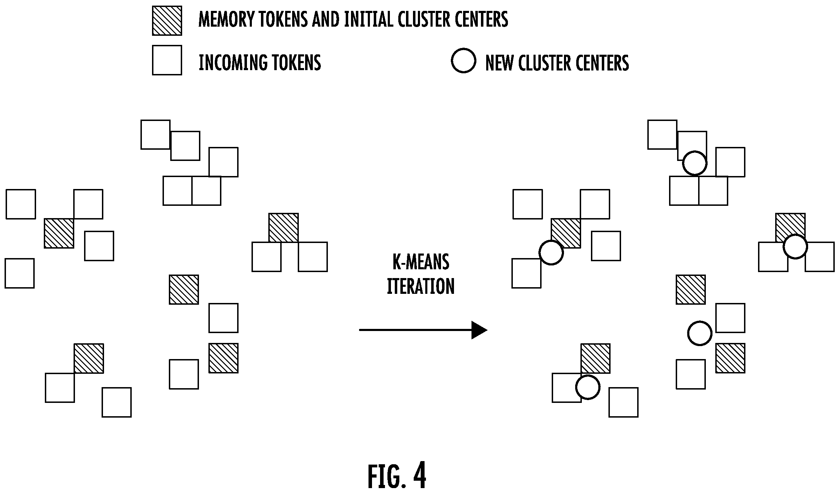

Referring now to FIG. 4, a graphical diagram illustrates an example clustering operation as per example embodiments of the present disclosure. The clustering operation is a component of the streaming feature bank, enabling the system to update the memory bank with a fixed computational budget while processing long input sequences. The diagram depicts memory tokens and initial cluster centers, represented by squares filled with shading, and incoming tokens, represented by unfilled squares. The clustering system performs a K-means iteration, a process that groups the incoming tokens with the existing memory tokens to form new cluster centers, depicted as filled circles.

The K-means iteration is an iterative process that optimizes the positions of the new cluster centers to best represent the distribution of the incoming tokens and the memory tokens. This optimization can be based on various distance metrics, such as Euclidean distance, and aims to minimize the variance within each cluster while maximizing the separation between different clusters. The resulting new cluster centers serve as an updated set of memory tokens, which are then stored back into the memory bank.

In alternative embodiments, the clustering operation can employ different clustering algorithms, such as hierarchical clustering or density-based clustering, to cater to different feature distributions and video content complexities. The clustering system can also be configured to apply different weights to the tokens, prioritizing certain features over others based on the context of the video or the specific requirements of the prediction task.

Furthermore, the clustering system can incorporate machine learning techniques to dynamically adjust the number of clusters or the clustering parameters based on the evolving content of the video. This adaptive clustering approach ensures that the memory bank remains an accurate and efficient summary of the video's features.

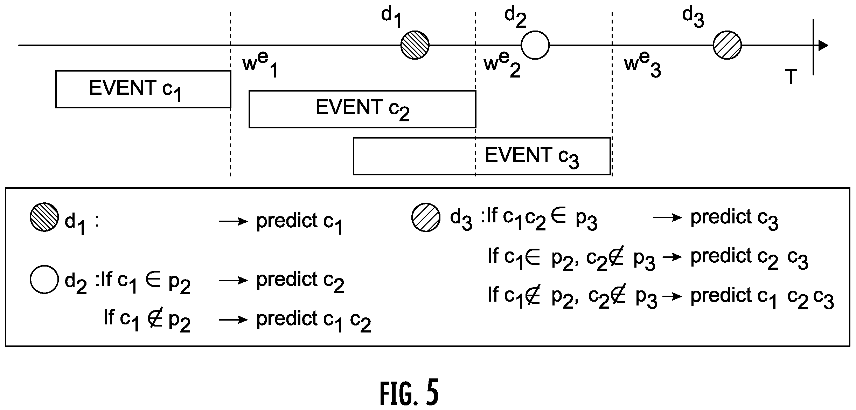

Referring now to FIG. 5, a graphical diagram illustrates one example decoding approach in accordance with example embodiments of the present disclosure. The diagram represents a timeline of a video with a plurality of decoding points, d1, d2, and d3, each associated with a respective decoding iteration. These decoding points can be placed at intervals along the timeline to enable the generation of predictions, such as textual captions, for events occurring within the video.

In the example illustrated decoding approach, at each decoding point, $d_i$, the machine-learned prediction model, which can include a language decoder, processes the current set of memory feature tokens retrieved from the memory bank to generate a prediction for the video events that have concluded before the decoding point. For instance, at decoding point d1, the model predicts event caption c1, and at decoding point d2, the model predicts event caption c2, provided that c1 is part of the prefix p2. If c1 is not included in p2, the model predicts both c1 and c2.

In the example decoding approach illustrated in FIG. 5, the predictions made at each decoding point can be contingent upon the events included in the prefixes, p1, p2, and p3, which are provided to the language decoder. These prefixes serve as an explicit memory, summarizing the earlier video content and providing context to avoid duplicative predictions. For example, at decoding point d3, if events c1 and c2 are part of the prefix p3, the model predicts only c3. However, if c1 is in p1 and c2 is not in p3, the model predicts c2 and c3. If c1 is not in p1 and c2 is not in p3, then model predicts c1, c2, and c3

The approach depicted in FIG. 5 enables the system to generate predictions in a streaming and causal manner, with the flexibility to adjust the frequency and timing of decoding iterations based on the video's content and event density. The system can be configured to perform decoding iterations at uniformly spaced decoding points throughout the video, or to adapt the spacing of decoding points dynamically in response to the occurrence of events within the video.

The streaming decoding approach illustrated in FIG. 5 provides a scalable and efficient solution for generating temporally-localized predictions for videos, capable of adapting to various video lengths, content complexities, and real-time processing requirements. The principles underlying the disclosed invention can be applied broadly to enhance the processing of any long sequence data in a computationally efficient and effective manner.

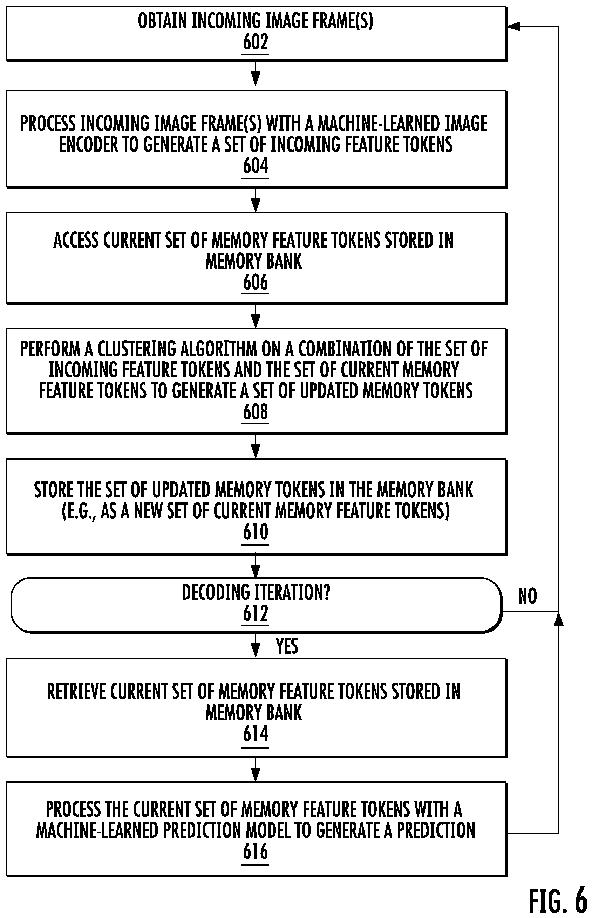

Referring now to FIG. 6, a flow chart diagram illustrates an example method for generating predictions from videos using a streaming feature bank in accordance with example embodiments of the present disclosure. The depicted method outlines a series of iterative steps that enable the processing of video content in a streaming and causal manner, leveraging a machine-learned image encoder and a memory bank to facilitate the generation of machine learning predictions, such as dense video captions.

The process initiates at 602, where the system obtains incoming image frame(s) 12, which can be individual frames or small batches of frames from an input video. These incoming image frame(s) 12 are then processed at 604 by a machine-learned image encoder 14 to generate a set of incoming feature tokens 16. The image encoder 14 can be a neural network trained to extract salient features from the visual content, transforming the raw pixel data into a more abstract and computationally manageable latent representation or "embedding".

Subsequently, at 606, the system accesses a current set of memory feature tokens 18 stored within a memory bank 20. This memory bank 20 acts as a dynamic repository that maintains a condensed summary of the video's content processed up to that point. The memory bank 20 can be designed to have a fixed size, ensuring that the computational cost remains bounded irrespective of the video's length.

At 608, a clustering algorithm is performed on a combination of the set of incoming feature tokens 16 and the set of current memory feature tokens 18 to generate a set of updated memory tokens 24. This clustering operation can utilize a K-means clustering system 22 or a weighted variant thereof, which applies momentum weights to cluster centers based on the number of tokens merged. The clustering system 22 ensures that the updated memory tokens 24 represent the most relevant and recent information from the video.

Once the set of updated memory tokens 24 is generated, they are stored back into the memory bank 20 at 610, effectively updating the current set of memory feature tokens 26. This iterative update mechanism allows the system to adapt to new information while discarding less relevant data, maintaining an efficient and up-to-date summary of the video's content.

The method then proceeds to decision block 612, where the system determines whether the current iteration is a decoding iteration. If the iteration is not a decoding iteration, the process loops back to 602 to obtain the next incoming image frame(s) 12. If it is a decoding iteration, the system moves to 614, where it retrieves the current set of memory feature tokens 26 from the memory bank 20.

At 616, the retrieved memory feature tokens 26 are processed with a machine-learned prediction model 28 to generate a prediction 30. This prediction model 28 can include a language decoder capable of generating textual captions for the video, which can be particularly useful for applications requiring real-time captioning, such as live video streaming or video conferencing.

The method illustrated in FIG. 6 provides a systematic approach to video processing that is both scalable and efficient, capable of handling long videos and generating detailed, temporally-localized predictions. The streaming feature bank model ensures that predictions can be made at various points throughout the video without the need to process the entire video at once, thereby reducing latency and enhancing the model's accuracy by preserving early video information through language context.

Example implementation details for example implementations of the systems and methods described herein are now provided. The systems and methods described herein are not limited to the following example implementation details.

Given a video $\mathbf{V} \in \mathbb{R}^{T \times H \times W \times 3}$, some example implementations can produce a set of temporally localized captions: $\{(s, e, \mathbf{c})_1, ..., (s, e, \mathbf{c})_{n_e}\}$, where $s \in \mathbb{R}$ and $e \in \mathbb{R}$ are the starting and ending timestamps ($0 \leq s < e \leq T$), respectively, $\mathbf{c} = [w_1, \cdots, w_n]$ is a sequence of word tokens, and $n_e$ the number of events. Each word token $w_i$ can be an integer in the range $[0, |V|]$, indexing the vocabulary V.

Some example captioning models can include a vision encoder followed by a text decoder. Some example visual encoders can operate as follows. A first step is to encode the video into features $\mathbf{f} = \mathcal{F}(\mathbf{V}), \mathbf{f} \in \mathbb{R}^{N \times D}$, where $N$ is the feature resolution (e.g., number of tokens for transformer-based encoders), and $D$ is the feature dimension. As examples, the visual feature encoder $\mathcal{F}$ can be a native video backbone or an image encoder applied to image frame(s). In the latter case, the video feature is a stack of image features, $N = T \cdot N_f$, where $N_f$ is the number of tokens per frame. Some example implementations can use a per-frame encoding, but instead of pre-extracting them from the whole video, a memory mechanism can be used to process the features in a causal, streaming fashion that can generalize to longer video durations. Some example visual encoders include a Vision Transformer (ViT) (e.g., initialized from a CLIP model).

Some example text decoders can operate as follows. Given the visual features, $\mathbf{f}$, and optional textual prefix tokens, $\mathbf{p}$, the text decoder, $\mathcal{D}$ generates a sequence of word tokens, c from them. Some example implementations can use an autoregressive decoder that generates the next word token, $w_i$, conditioned on previous words, $\mathbf{w}_{1:i-1}$, and prefix if provided as $w_i = \mathcal{D}(\mathbf{f}, \mathbf{p}, \mathbf{w}_{1:i-1})$. Note that prefix tokens are typically not used in captioning tasks, but are used in question-answering (QA) to encode the input question. As an example, the text decoder, $\mathcal{D}$, can be a sequence of transformer layers operating on a concatenation of visual features $\mathbf{f}$ and word embeddings of the prefix. This architecture is shown to be effective in both captioning and QA tasks across image and video.

Example tasks include dense video captioning with timestamps. Combining the above visual encoder and text decoder can provide a basic architecture for video captioning. To extend it for captioning multiple events with starting and ending timestamps, two modifications can be performed: First, the vocabulary, $V$, of the captioning model can be augmented with time tokens, $w^s$ and $w^e$, which represent the starting and ending times, respectively. A single event is therefore represented as $\mathbf{c}' = [w^s, w^e, w_1, \cdots, w_n]$, and $|V'| = |V| + |T|$ where $|V| \leq w^s < w^e \leq |V'|$, and $|T|$ is the number of time tokens. Second, all timed captions can be concatenated into a single long caption that is ordered by starting time: $\mathbf{C} = [\mathbf{c}'_1, \mathbf{c}'_2, \cdots, \mathbf{c}'_{n_e}]$ where $n_e$ is the number of events. Therefore, dense video captioning can be formulated as standard video captioning with target $\mathbf{C}$.

As examples, the input visual features, $\mathbf{f}$, can have dimensionality $\mathbb{R}^{T \cdot N_f \times D}$, where typical values are $T > 64$ for a sparsely sampled (e.g., 1 FPS), few-minute-long video, and $N_f = 257$ tokens per-frame for a vision transformer such as CLIP. Directly feeding all $T \cdot N_f$ to the text decoder is prohibitively expensive, due to the quadratic complexity of self-attention. Therefore, some existing methods aggressively downsample $\mathbf{f}$ to reduce the number of tokens (by temporally sampling a few frames with large strides, or spatially subsampling each frame to a single token). Even so, memory limits will be reached with longer videos, and the information required for fine-grained localization and description is lost. Therefore, rather than aggressive downsampling, some example implementations can use a memory mechanism to process all tokens frame-by-frame, which ensures that the computational cost is bounded irrespective of the length of the video.

Specifically, as an example, let $K$ be a pre-defined memory size, the memory at each time $\mathbf{M}_t$ would always be the constant size $K$, i.e., $\mathbf{M}_t \in \mathbb{R}^{K \times D}$, $\forall t$. Some example implementations interpret $\mathbf{M}$ as being a summary of all relevant information in the video, and initialize it by taking the first $K$ tokens from f. Therefore, some example implementations set $K$

as a multiple of $N_f$, such that the initial memory is the features of the first $\dfrac{K}{N_f}$ frames:

$$\mathbf{M}_{K/N_f} = [\mathbf{f}_1, \cdots, \mathbf{f}_{K/N_f}].$$

Next, some example implementations update the memory at each timestamp for each incoming frame $\mathbf{f}_t$. Example implementations can keep as much diverse information in the original video as possible, while not increasing the storage budget (e.g., by keeping a constant memory size $K$). Some example implementations therefore leverage a K-means-like clustering algorithm, to use the feature cluster centers as the approximate video features. To avoid the cluster centers biasing quickly to incoming features, some example implementations can keep track of the number of merged tokens in each cluster center. Some example implementations can use this as a momentum weight, so that cluster centers that are merged from more tokens change slower. One example algorithm is provided below. The K-means algorithm is not differentiable with respect to the assignment of data points to cluster centers, $\delta$. However, the inputs and outputs of the memory module are the updated cluster centers, $\mathbf{M}_t$, which is a linear mapping of the input $\mathbf{X} = [\mathbf{M}_{t-1}, \mathbf{f}_t]$, as $\mathbf{M}_t = A\mathbf{X}$, where $A$ is a weight matrix computed from X. Therefore, even though some example implementations cannot compute the gradient of $\mathbf{A}$ with respect to $\mathbf{X}$, some example implementations can compute the gradient of $\mathbf{M}_t$ with respect to the input $\mathbf{X}$, and thus to the input visual feature $\mathbf{f}$. As a result, some example implementations can use the memory module in any part of a neural network, and learn parameters in preceding layers.

One example algorithm for updating memory tokens at a timestamp is as follows:

Input:

$\mathbf{M}_{t-1} \in \mathbb{R}^{K \times D}$ : memory tokens

$\mathbf{W}_{t-1} \in \mathbb{R}^{K}$ : weights of memory tokens

$\mathbf{f}_t \in \mathbb{R}^{N_f \times D}$ : incoming tokens

Hyperparameters:
$\tau$ : number of K-means iterations.
Output:

$\mathbf{M}_t \in \mathbb{R}^{K \times D}$ : updated memory tokens

$\mathbf{W}_t \in \mathbb{R}^{K}$ : updated weights of memory

Algorithm:

1.     $\mathbf{X} \leftarrow [\mathbf{M}_{t-1}, \mathbf{f}_t]$         // Concatenate memory and incoming tokens.

2.     $\mathbf{W} \leftarrow [\mathbf{W}_{t-1}, \mathbf{1}]$         // Initialize incoming weights and concatenate.

3.     $\mathbf{M}_t \leftarrow \mathbf{M}_{t-1}$         // Initialize new cluster centers as the old centers.

4.     **for** $i \leftarrow 1: \tau$ **do**

5.         $\mathbf{d} \leftarrow \text{pairwise\_l2\_distance}(\mathbf{X}, \mathbf{M_t})$      // Shape $(K + N_f, K)$.

6.         $\delta \leftarrow \mathbf{d}.\text{argmin}(\text{axis}=1)$      // Assign each token to a center.

7.         $\delta \leftarrow \text{make\_onehot}(\delta, \text{K})$      // Binary. Shape$(K + N_f, K)$.

8.         $\mathbf{W}_t \leftarrow \delta^T \mathbf{W}_t$      // Compute #tokens assigned to each center.

9.         $\mathbf{A} \leftarrow \delta^T / \mathbf{W}_t$      // Weight matrix. "/" is elementwise div.

10.       $\mathbf{M}_t \leftarrow \mathbf{A}\mathbf{X}$      // Compute new centers as a linear function.

11.    **end**

12.    **return** $\mathbf{M}_t, \mathbf{W}_t$

The memory module described above enables some example implementations to efficiently ingest long input videos. However, it is still desirable for the model's text decoder to predict outputs before it has processed the entire input sequence: Streaming the output substantially decreases the latency of the model, as the model does not have to wait to process the entire input sequence to make predictions. This is particularly relevant for processing, for example, live video streams. Furthermore, streaming the output can in fact increase the model's accuracy: As we have a memory with a fixed size, K, from which we decode outputs, the memory will inevitably lose information over time. Therefore this issue can be averted by making predictions before the model has processed the entire video.

Some example implementations define "decoding points", $d_j$, as intermediate timestamps where the model decodes an output (e.g., decodes event captions) given the features in our memory, $\mathbf{M}_{d_j}$. Some example implementations can train the model such that at each decoding point, $d_j$, the model predicts all event captions that finished before it. More specifically,

$$\mathcal{Y}_i = \{(w_j^s, w_j^e, \mathbf{c}_j) | w_j^e \leq d_i\}, \quad (1)$$

where $Y_i$ is the set of all event captions corresponding to the $i$th decoding point $d_i$, and $w_j^s$, $w_j^e$ are the starting and ending time of the $j$th event.

A decoding point, $d_i$, can be at any frame. At each point, the model can take the memory features, $\mathbf{M}_{d_i}$, and predict all events that have finished before $d_i$, and are not in the prefix $\mathbf{p}$. Therefore, the union between the prefix and the prediction target covers all events finished before it.

As decoding points are applied sequentially, later decoding points can have access to the predictions of earlier decoding points, and may endeavor to not repeat them again. Therefore, from the second decoding point onwards, some example implementations concatenate the outputs of previous decoding points as the prefix to the text decoder. Moreover, during training, some example implementations perform further data augmentation by randomly removing some of the previous event captions from the prefix, and adding them to the target instead, to increase robustness to potential errors in earlier predictions. Some example implementations therefore denote the prefixes and captioning targets during training as

$$\mathbf{p}_i = \left[\mathbf{c}'_1, \mathbf{c}'_2, ..., \mathbf{c}'_{j-1}\right] \quad (2)$$

$$\mathbf{y}_i = \left[\mathbf{c}'_j, \mathbf{c}'_{j+1}, ..., \mathbf{c}'_{|\mathcal{Y}_i|}\right], \quad (3)$$

where $j < |Y_i|$ is a randomly chosen splitting point to partition the target and context. During inference, some example implementations use the models actual predictions, $\mathbf{p}_i = [\hat{\mathbf{y}}_1, \hat{\mathbf{y}}_2, ... , \hat{\mathbf{y}}_{i-1}]$, instead.

In practice, some example implementations uniformly sample decoding points during both training and inference, with a stride of $S$ frames. Since the model is trained to predict all event captions before the decoding point, it means that the exact location at inference time does not need to match the event boundaries closely. The number of decoding points can be also different between training and inference.

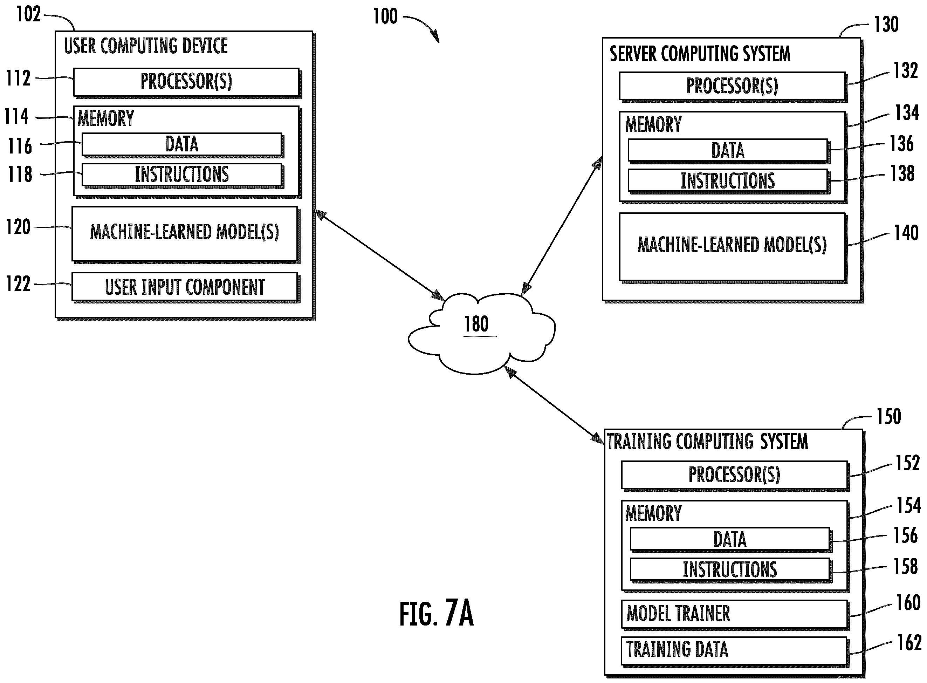

Figure 7A depicts a block diagram of an example computing system 100 according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more machine-learned models 120. For example, the machine-learned models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Example machine-learned models 120 are discussed with reference to Figures 1-6.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120.

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 140 as a portion of a web service. Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 140 are discussed with reference to Figures 1-6.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The machine-learned models described in this specification may be used in a variety of tasks, applications, and/or use cases.

In some implementations, the input to the machine-learned model(s) of the present disclosure can be image data. The machine-learned model(s) can process the image data to generate an output. As an example, the machine-learned model(s) can process the image data to generate an image recognition output (e.g., a recognition of the image data, a latent embedding of the image data, an encoded representation of the image data, a hash of the image data, etc.). As another example, the machine-learned model(s) can process the image data to generate an image segmentation output. As another example, the machine-learned model(s) can process the image data to generate an image classification output. As another example, the machine-learned model(s) can process the image data to generate an image data modification output (e.g., an alteration of the image data, etc.). As another example, the machine-learned model(s) can process the image data to generate an encoded image data output (e.g., an encoded and/or compressed representation of the image data, etc.). As another example, the machine-learned model(s) can process the image data to generate an upscaled image data output. As another example, the machine-learned model(s) can process the image data to generate a prediction output.

In some implementations, the input to the machine-learned model(s) of the present disclosure can be text or natural language data. The machine-learned model(s) can process the text or natural language data to generate an output. As an example, the machine-learned model(s) can process the natural language data to generate a language encoding output. As another example, the machine-learned model(s) can process the text or natural language data to generate a latent text embedding output. As another example, the machine-learned model(s) can process the text or natural language data to generate a translation output. As another example, the machine-learned model(s) can process the text or natural language data to generate a classification output. As another example, the machine-learned model(s) can process the text or natural language data to generate a textual segmentation output. As another example, the machine-learned model(s) can process the text or natural language data to generate a semantic intent output. As another example, the machine-learned model(s) can process the text or natural language data to generate an upscaled text or natural language output (e.g., text or natural language data that is higher quality than the input text or natural language, etc.). As another example, the machine-learned model(s) can process the text or natural language data to generate a prediction output.

In some implementations, the input to the machine-learned model(s) of the present disclosure can be speech data. The machine-learned model(s) can process the speech data to generate an output. As an example, the machine-learned model(s) can process the speech data to generate a speech recognition output. As another example, the machine-learned model(s) can process the speech data to generate a speech translation output. As another example, the machine-learned model(s) can process the speech data to generate a latent embedding output. As another example, the machine-learned model(s) can process the speech data to generate an encoded speech output (e.g., an encoded and/or compressed representation of the speech data, etc.). As another example, the machine-learned model(s) can process the speech data to generate an upscaled speech output (e.g., speech data that is higher quality than the input speech data, etc.). As another example, the machine-learned model(s) can process the speech data to generate a textual representation output (e.g., a textual representation of the input speech data, etc.). As another example, the machine-learned model(s) can process the speech data to generate a prediction output.

In some implementations, the input to the machine-learned model(s) of the present disclosure can be latent encoding data (e.g., a latent space representation of an input, etc.). The machine-learned model(s) can process the latent encoding data to generate an output. As an example, the machine-learned model(s) can process the latent encoding data to generate a recognition output. As another example, the machine-learned model(s) can process the latent encoding data to generate a reconstruction output. As another example, the machine-learned model(s) can process the latent encoding data to generate a search output. As another example, the machine-learned model(s) can process the latent encoding data to generate a reclustering output. As another example, the machine-learned model(s) can process the latent encoding data to generate a prediction output.

In some implementations, the input to the machine-learned model(s) of the present disclosure can be statistical data. Statistical data can be, represent, or otherwise include data computed and/or calculated from some other data source. The machine-learned model(s) can process the statistical data to generate an output. As an example, the machine-learned model(s) can process the statistical data to generate a recognition output. As another example, the machine-learned model(s) can process the statistical data to generate a prediction output. As another example, the machine-learned model(s) can process the statistical data to generate a classification output. As another example, the machine-learned model(s) can process the statistical data to generate a segmentation output. As another example, the machine-learned model(s) can process the statistical data to generate a visualization output. As another example, the machine-learned model(s) can process the statistical data to generate a diagnostic output.

In some implementations, the input to the machine-learned model(s) of the present disclosure can be sensor data. The machine-learned model(s) can process the sensor data to generate an output. As an example, the machine-learned model(s) can process the sensor data to generate a recognition output. As another example, the machine-learned model(s) can process the sensor data to generate a prediction output. As another example, the machine-learned model(s) can process the sensor data to generate a classification output. As another example, the machine-learned model(s) can process the sensor data to generate a segmentation output. As another example, the machine-learned model(s) can process the sensor data to generate a visualization output. As another example, the machine-learned model(s) can process the sensor data to generate a diagnostic output. As another example, the machine-learned model(s) can process the sensor data to generate a detection output.

In some cases, the machine-learned model(s) can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g. one or more images or videos), the output comprises compressed visual data, and the task is a visual data compression task. In another example, the task may comprise generating an embedding for input data (e.g. input audio or visual data).

In some cases, the input includes visual data and the task is a computer vision task. In some cases, the input includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

Figure 7A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

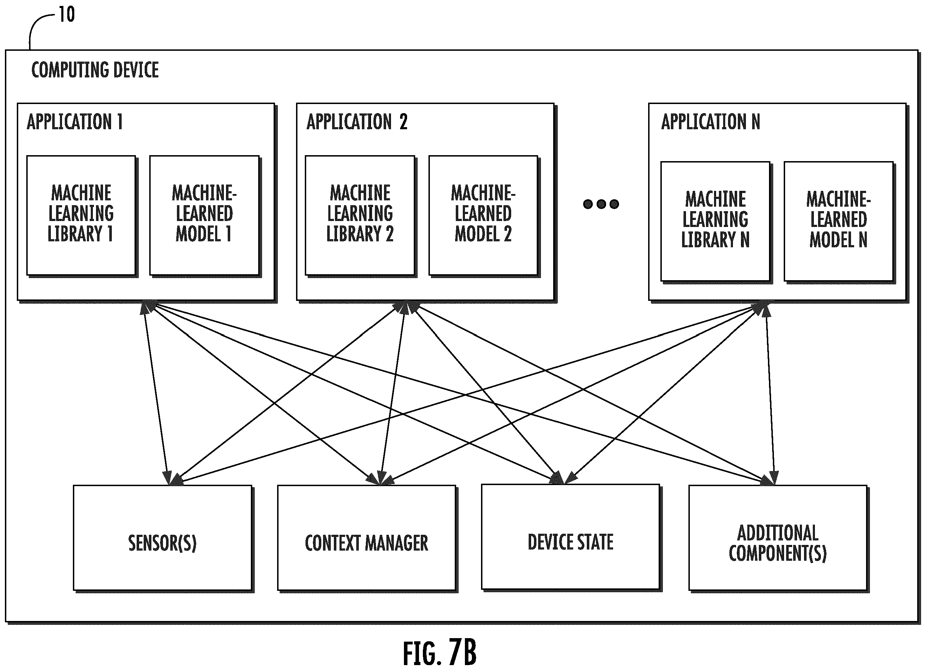

Figure 7B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 7B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

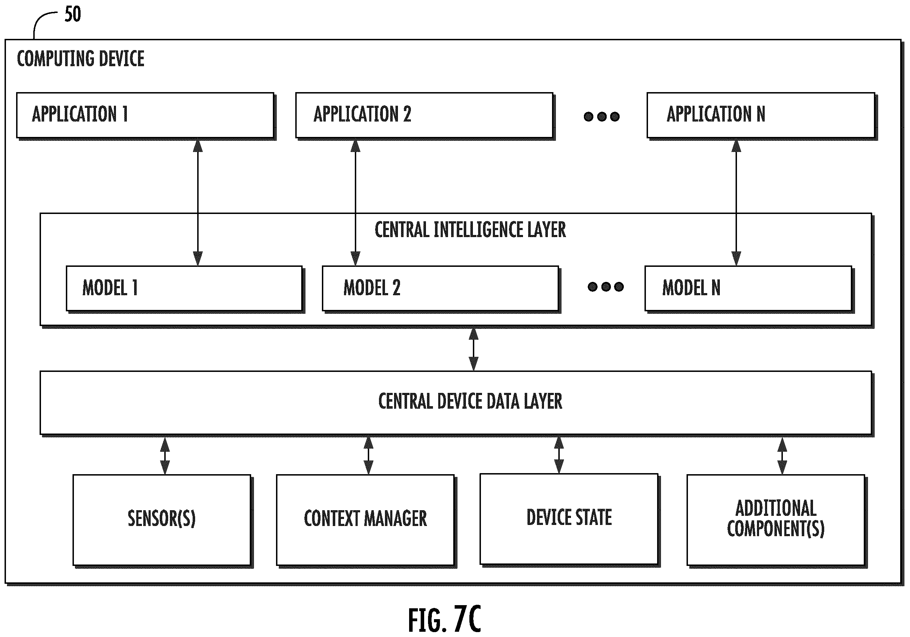

Figure 7C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 7C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 7C, the central device data layer can communicate with a number of other components of the computing device, such as, for example, one or more sensors, a context manager, a device state component, and/or additional components. In some implementations, the central device data layer can communicate with each device component using an API (e.g., a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

**Claims**

1. A computer-implemented method to generate machine learning predictions for videos, the method comprising:

    for each of a plurality of feature update iterations:

        processing, by a computing system comprising one or more computing devices, one or more incoming image frames of an input video with a machine-learned image encoder model to generate a set of incoming feature tokens;
        accessing, by the computing system, a current set of memory feature tokens stored in a memory bank;
        performing, by the computing system, a clustering algorithm on a combination of the set of incoming feature tokens and the set of current memory feature tokens to generate a set of updated memory tokens; and
        storing, by the computing system, the set of updated memory tokens in the memory bank; and

    for each of a plurality of decoding iterations:

        retrieving, by the computing system, the current set of memory feature tokens from the memory bank; and
        processing, by the computing system, the current set of memory feature tokens with a machine-learned prediction model to generate a prediction.

2. The computer-implemented method of any preceding claim, wherein the plurality of feature update iterations and the plurality of decoding iterations are performed in a streaming and causal manner.

3. The computer-implemented method of any preceding claim, wherein the machine-learned prediction model comprises a language decoder and wherein the prediction comprises a textual caption for the video.

4. The computer-implemented method of claim 3, wherein, at each decoding iteration, the language decoder is provided with the current set of memory feature tokens and all prior textual captions generated at all prior decoding iterations.

5. The computer-implemented method of any preceding claim, wherein the memory bank has a size of $K$ and the set of incoming feature tokens has a size of $N_f$, and wherein $K$ equals a positive integer times $N_f$.

6. The computer-implemented method of claim 5, wherein the method comprises filling the memory bank with the incoming feature tokens from the first $K/N_f$ incoming image frames of the video before performing said feature update iterations.

7. The computer-implemented method of any preceding claim, wherein performing, by the computing system, the clustering algorithm on the combination of the set of incoming feature tokens and the set of current memory feature tokens comprises performing, by the computing system, a K-means clustering algorithm on the combination of the set of incoming feature tokens and the set of current memory feature tokens.

8. The computer-implemented method of any preceding claim, wherein performing, by the computing system, the K-means clustering algorithm on the combination of the set of incoming feature tokens and the set of current memory feature tokens comprises performing, by the computing system, a weighted K-means clustering algorithm on the combination of the set of incoming feature tokens and the set of current memory feature tokens, wherein the weighted K-means clustering algorithm applies a momentum weight to each cluster based on a number of tokens merged to each cluster.

9. The computer-implemented method of any preceding claim, wherein the number of decoding iterations is less than the number of feature update iterations.

10. The computer-implemented method of any preceding claim, wherein the decoding iterations are performed at a plurality of decoding points that are uniformly spaced throughout the video.

11. The computer-implemented method of any preceding claim, wherein, for each feature update iteration, the one or more incoming image frames comprises a single incoming image frame.

12. One or more non-transitory computer-readable media that store computer-executable instructions for performing operations, the operations comprising:

processing, by a computing system comprising one or more computing devices, one or more incoming image frames of an input video with a machine-learned image encoder model to generate a set of incoming feature tokens;

accessing, by the computing system, a current set of memory feature tokens stored in a memory bank;

performing, by the computing system, a clustering algorithm on a combination of the set of incoming feature tokens and the set of current memory feature tokens to generate a set of updated memory tokens; and

processing, by the computing system, the current set of memory feature tokens with a machine-learned prediction model to generate a prediction; and

modifying, by the computing system, one or more parameters of one or both of the machine-learned prediction model and the machine-learned image encoder model based on a loss function that compares the prediction to a ground truth target.

13. The one or more non-transitory computer-readable media of claim 12, wherein the machine-learned prediction model comprises a language decoder.

14. The one or more non-transitory computer-readable media of claim 13, wherein the prediction of the language decoder comprises a textual caption for the video and the ground truth target comprises a ground truth textual caption.

15. The one or more non-transitory computer-readable media of claim 14, wherein the language decoder is provided with an augmented set of previous event captions, the augmented set of previous event captions having been augmented by removal of a previous event caption from the set of previous event captions.

FIG. 1

FIG. 2

FIG. 3

FIG. 4

FIG. 5

EP 4 604 016 A1

OBTAIN INCOMING IMAGE FRAME(S)
602

PROCESS INCOMING IMAGE FRAME(S) WITH A MACHINE-LEARNED IMAGE ENCODER TO GENERATE A SET OF INCOMING FEATURE TOKENS
604

ACCESS CURRENT SET OF MEMORY FEATURE TOKENS STORED IN MEMORY BANK
606

PERFORM A CLUSTERING ALGORITHM ON A COMBINATION OF THE SET OF INCOMING FEATURE TOKENS AND THE SET OF CURRENT MEMORY FEATURE TOKENS TO GENERATE A SET OF UPDATED MEMORY TOKENS
608

STORE THE SET OF UPDATED MEMORY TOKENS IN THE MEMORY BANK (E.G., AS A NEW SET OF CURRENT MEMORY FEATURE TOKENS)
610

DECODING ITERATION?
612

NO

YES

RETRIEVE CURRENT SET OF MEMORY FEATURE TOKENS STORED IN MEMORY BANK
614

PROCESS THE CURRENT SET OF MEMORY FEATURE TOKENS WITH A MACHINE-LEARNED PREDICTION MODEL TO GENERATE A PREDICTION
616

FIG. 6

FIG. 7A

EP 4 604 016 A1

FIG. 7B

EP 4 604 016 A1

EP 4 604 016 A1

**50**

COMPUTING DEVICE

| APPLICATION 1 | APPLICATION 2 | • • • | APPLICATION N |

CENTRAL INTELLIGENCE LAYER

| MODEL 1 | MODEL 2 | • • • | MODEL N |

CENTRAL DEVICE DATA LAYER

| SENSOR(S) | CONTEXT MANAGER | DEVICE STATE | ADDITIONAL COMPONENT(S) |

**FIG. 7C**

Europäisches
Patentamt

European
Patent Office

Office européen
des brevets

# EUROPEAN SEARCH REPORT

**Application Number**

EP 25 15 7662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Song Enxin ET AL: "MovieChat: From Dense Token to Sparse Memory for Long Video Understanding", <br> , <br> 3 December 2023 (2023-12-03), XP093286039, Retrieved from the Internet: URL:https://arxiv.org/pdf/2307.16449v3 | 1-3,5-15 | INV. <br> G06N3/045 <br> G06N3/0464 <br> G06N20/00 <br> G06V10/82 <br> G06V20/40 |
| A | * the whole document * <br> - - - - - | 4 | |

**TECHNICAL FIELDS SEARCHED       (IPC)**

G06N
G06V

The present search report has been drawn up for all claims

| Place of search | Date of completion of the search | Examiner |
|---|---|---|
| The Hague | 13 June 2025 | Szymanski, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

**Patent documents cited in the description**

- US 63552959